# EUROPÄISCHE PATENTSCHRIFT

(11) **EP 2 561 987 B1**
(45) Veröffentlichungstag und Bekanntmachung des Hinweises auf die Patenterteilung: **21.12.2016**
(21) Anmeldenummer: 12450038.0
(22) Anmeldetag: 24.08.2012
(51) Int. Cl.: B41C 1/04, B41C 1/05

(54) **Verfahren zum Gravieren einer Druckplatte**
Method for engraving a printing plate
Procédé de gravure d'une planche d'impression

(30) Priorität: 25.08.2011 AT 12202011
(43) Veröffentlichungstag der Anmeldung: 27.02.2013
(73) Patentinhaber: Oesterreichische Banknoten- und Sicherheitsdruck GmbH, 1090 Wien (AT)
(72) Erfinder: Kern, Thomas, 1230 Wien (AT); Heine, Thomas, 1160 Wien (AT)
(74) Vertreter: Gibler & Poth Patentanwälte KG

(56) Entgegenhaltungen:
- WO-A2-03/101754
- DE-A1- 2 709 554
- US-A- 4 131 782

## Beschreibung

Die Erfindung betrifft ein Verfahren zum Gravieren einer Druckplatte für den Intaglio-Stichtiefdruck gemäß dem Oberbegriff des Patentanspruches 1.

Ein derartiges Verfahren ist bekannt, bei welchem ein Laserstrahl mittels beweglichen Spiegel über eine zu gravierende Druckplatte geführt wird. Der Verlauf der Bewegung des Laserstrahls unterteilt sich hierbei in Gravurstrecken, bei welchen das Material der Druckplatte vom Laserstrahl abgetragen wird, und in Sprüngen, bei welchen der Laser abgeschaltet ist.

Nachteilig an diesem Verfahren ist allerdings, dass die Gravur einer Druckplatte sehr lange dauert.

Aus der US 4 131 782 A, der DE 27 09 554 A1 und der WO 03/101754 A2 sind Verfahren zum Lasergravieren eines Punktrasters von einander nicht überlappenden Näpfchen bekannt.

Aufgabe der Erfindung ist es daher ein Verfahren der eingangs genannten Art anzugeben, mit welchem die genannten Nachteile vermieden werden können, mit welchem ein schnelles Gravieren von Druckplatten bei gleichzeitig guter Qualität möglich ist.

Erfindungsgemäß wird dies durch die Merkmale des Patentanspruches 1 erreicht.

Dadurch ergibt sich der Vorteil, dass die Gravurdauer durch den Wegfall der Brems-und Beschleunigungsvorgänge sowie durch die Wartezeiten nach Sprüngen - auf Grund der masseverzögerten Reaktion des Spiegelsystems - deutlich reduziert werden kann. Weiters ergibt sich dadurch der Vorteil, dass eine gute Qualität der Gravur der Druckplatte gewährleistet werden kann, da der Laser im Wesentlichen im Dauerbetrieb betrieben werden kann, wodurch auch die Ausgangsleistung des Lasers im Wesentlichen konstant gehalten werden kann.

Die Unteransprüche betreffen weitere vorteilhafte Ausgestaltungen der Erfindung.

Ausdrücklich wird hiermit auf den Wortlaut der Ansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine Skizze einer bevorzugten Ausführungsform einer Vorrichtung zur Durchführung des Verfahrens;
Fig. 2 eine Prinzipdarstellung des Verfahrens gemäß dem Stand der Technik; und
Fig. 3 eine Prinzipdarstellung einer bevorzugten Ausführungsform des erfindungsgemäßen Verfahrens.

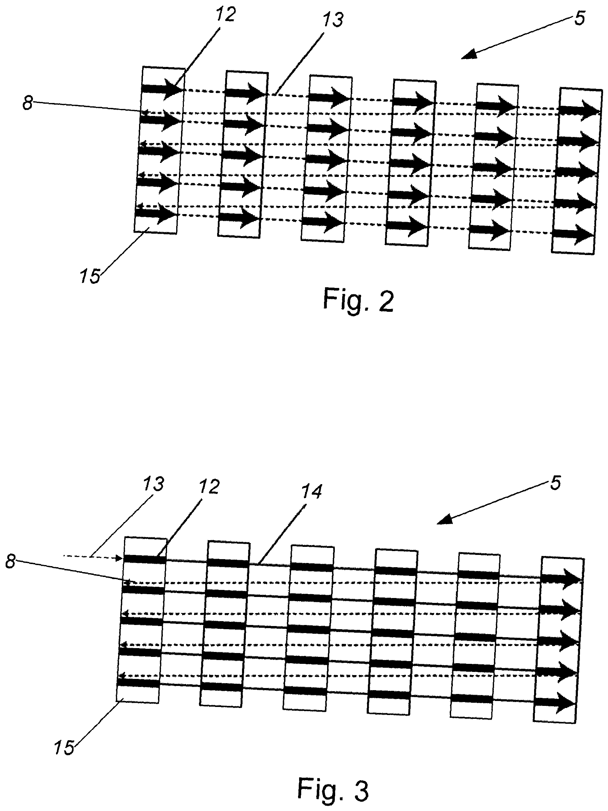

Die Fig. 3 zeigt eine bevorzugte Ausführungsform eines Verfahrens zum Gravieren einer Druckplatte 1 für den Intaglio-Stichtiefdruck mit einem Laser 2 und einem mit dem Laser 2 zusammenwirkenden Spiegelsystem 3.

Der Intaglio-Stichtiefdruck , ist ein Druckverfahren zum Drucken mit einer gravierten Druckplatte 1, wobei die Form der Gravur nicht nur als Farbe auf die zu bedruckenden Bögen aufgetragen wird, sondern es auch zu einer nachhaltigen und oft auch tastbaren plastischen Verformung der bedruckten Bögen kommt, weshalb der Intaglio-Stichtiefdruck oft als Sicherheitsmerkmal für Sicherheitsdokumente wie beispielsweise Banknoten, Briefmarken oder Wertpapieren verwendet wird.

Beim Verfahren zum Gravieren einer Druckplatte 1 wird das Spiegelsystem 3 derart bewegt, dass der Laserstrahl 4 des Lasers 2 bei dem Abtrag einer ersten Schicht in im Wesentlichen parallelen ersten Zeilen über ein Gravurfeld 5 bewegt wird, wobei die Bewegungsgeschwindigkeit des Laserstrahls 4 in jeder ersten Zeile nach einem Anfangsbeschleunigungsbereich bis zu einem Endverzögerungsbereich annähernd konstant gehalten wird. Dadurch kann die Zahl der Brems- und Beschleunigungsvorgänge des Spiegelsystems 3, sowie der Wartezeiten nach Sprüngen 13 in vorteilhafter Weise gering gehalten werden.

Die Bewegungsgeschwindigkeit des Laserstrahls 4 ist jene Geschwindigkeit, mit welcher der Laserstrahls 4 die Druckplatte 1 überstreicht.

Der Anfangsbeschleunigungsbereich ist dabei jener Bereich, den der Laserstrahl 4 bei dem Beschleunigungsvorgang des Spiegelsystems 3 überstreicht, oder, wenn der Laserstrahl 4 unterbrochen wird, überstreichen würde.

Analog ist der Endverzögerungsbereich jener Bereich, den der Laserstrahl 4 bei dem Bremsvorgang des Spiegelsystems 3 überstreicht, oder, wenn der Laserstrahl 4 unterbrochen wird, überstreichen würde.

Die Wartezeiten nach Sprüngen sind jene Zeiten, welche bei einem Sprung 13 durch die masseverzögerte Reaktion des Spiegelsystems 3 verursacht werden.

Vorgesehen ist, dass mittels eines Shutterelementes 7 das Auftreffen des Laserstrahls 4 auf einem Gravurbereich 6 in Abhängigkeit einer Vorlage geregelt wird. Dadurch kann eine gezielte Gravur der Druckplatte 1 in Abhängigkeit der Vorlage auch bei konstanter Bewegungsgeschwindigkeit des Laserstrahls 4 erfolgen. Da der Laser dadurch im Wesentlichen im Dauerbetrieb betrieben werden kann, ist auch die Ausgangsleistung des Lasers im Wesentlichen konstant. Durch den im Wesentlichen Dauerbetrieb des Lasers 2 können unerwünschte Einschalteffekte vermieden werden, was zur hohen Qualität der Gravur der Druckplatte 1 beiträgt.

Insbesondere kann vorgesehen sein, dass die Druckplatte 1 zur Herstellung eines Sicherheitsdokumentes verwendet wird, da dadurch zuverlässig Sicherheitsmerkmale in hoher Qualität auf das Sicherheitsdokument aufgeprägt werden können.

Besonders bevorzugt kann vorgesehen sein, dass direkt eine Druckplatte 1 bestehend aus Metall, insbesondere Messing, vom Laserstrahl 4 graviert wird. Direkt graviert bedeutet in dem Zusammenhang, dass nicht zunächst ein sogenannter Master aus einem wenig stabilen Material wie Kunststoffen graviert, und von diesem Master die endgültige Druckplatte 1 abgeformt wird, sondern die zum Drucken vorgesehene Druckplatte 1 direkt vom Laserstrahl 4 graviert wird. Dadurch kann ein Bearbeitungsschritt bei der Herstellung der Druckplatte 1 entfallen, wobei auch die damit verbunden Fehler vermieden werden können. Messing bietet den Vorteil, dass dieses sowohl leicht zu bearbeiten ist, und gleichzeitig den hohen mechanischen Belastungen des Intaglio-Stichtiefdruckes gewachsen ist.

Insbesondere kann vorgesehen sein, dass eine im Wesentlichen ebene Druckplatte 1 graviert wird. Solche ebenen Druckplatten sind besonders flexibel im Einsatz.

Das Shutterelement 7 ist dazu ausgebildet, den Laserstrahl 4 vorgebbar zu unterbrechen oder abzuschwächen. Solche Shutterelemente 7 können sehr hochfrequent arbeiten und dadurch den Laserstrahl 4 sehr zeitgenau, oder im Falle eines gepulsten Lasers sogar einzelne Pulse des Lasers 2 individuell manipulieren, also in Abhängigkeit einer Vorlage abschwächen oder völlig ausblenden.

Ausgehend von einer Vorlage, nach welcher das Auftreffen des Laserstrahls 4 auf den Gravurbereich geregelt werden kann, kann dann computerunterstützt das Spiegelsystem 3 und das Shutterelement 7 angesteuert werden.

Der Gravurbereich 6 ist dabei jener Bereich der Druckplatte 1, welcher vom Laserstrahl 4 durch Ansteuerung des Spiegelsystems 3 gravierbar ist, ohne dass die Position der Druckplatte 1 zum Spiegelsystem 3 verändert werden muss.

Bevorzugt kann dabei vorgesehen sein, dass die Druckplatte 1 in mehrere der Gravurbereiche 6 unterteilt wird und eine Spiegelsystemhalterung und/oder die Druckplatte 1 zwischen dem Gravieren unterschiedlicher Gravurbereiche 6 bewegt werden. Die Spiegelsystemhalterung ist dabei eine Halterung des Spiegelsystems 3, welche bewegbar ausgebildet sein kann. Dadurch kann die Druckplatte 1 auch größer als der Gravurbereich 6 sein. Weiters kann die Druckplatte 1 mehrere nicht zusammenhängende Gravurbereiche 6 umfassen.

Ein Gravurbereich 6 wiederum kann in mehrere Gravurfelder 5 unterteilt werden, wobei diese bevorzugt von gravierten Teilbereichen des Gravurbereichs 6 gebildet werden können, während ungravierte Zonen des Gravurbereiches 6 ausgespart werden können.

Fig. 2 veranschaulicht den Stand der Technik an Hand eines Beispiels, bei welchem sechs parallel und im gleichen Abstand zueinanderliegende Rechtecke 15 zu gravieren sind. Zum Zwecke der Übersichtlichkeit ist jedes Element in Fig. 2 und Fig. 3 nur einmal mit einem Bezugszeichen versehen. Gemäß dem Stand der Technik ist bei diesem Beispiel eine erste Zeile hierbei in sechs Gravurstrecken 12 und fünf Sprüngen 13 unterteilt. Entlang der Gravurstrecken 12 wird das Material der Druckplatte 1 vom Laserstrahl 4 abgetragen. Bei den Sprüngen 13 ist der Laser 2 abgeschaltet. Gemäß diesem Beispiel sind zehn Übergänge zwischen einer Gravurstrecke 12 und einem Sprung 13, oder umgekehrt, notwendig. Bei diesen Übergangen ist es notwendig, dass die Bewegung des Spiegelsystems 3 zunächst gebremst wird, der Laser aus-, oder eingeschaltet wird, und anschließend das Spiegelsystem 3 wieder beschleunigt wird.

Fig. 3 veranschaulicht die bevorzugte Ausführungsform des erfindungsgemäßen Verfahrens an Hand des selben Beispiels. Hierbei wird ebenfalls mittels einem Sprung 13 die Position an welcher der Laserstrahl 4 auftreffen würde, wenn er eingeschaltet und/oder nicht unterbrochen wäre, an den Anfang der ersten Zeile bewegt. Anschließend wird der Laser 2 aktiviert, und die Bewegungsgeschwindigkeit des Laserstrahls 4 nach einem Anfangsbeschleunigungsbereich, welcher hier nicht dargestellt ist, im Wesentlichen konstant gehalten. Hierbei ist die erste Zeile in sechs Gravurstrecken 12 und fünf Transferstrecken 14 unterteilt. Bei der Transferstrecke 14 ist der Laser 2 eingeschaltet, aber der Laserstrahl 4 wird von dem Shutterelement 7 blockiert, wodurch die Bewegungsgeschwindigkeit im Wesentlichen konstant gehalten werden kann. Die präzise und hochschnelle Ansteuerung des Shutterelementes 7 ermöglicht eine hohe Qualität der Länge sowohl der Gravurstrecken 12 als auch der Transferstrecken 14 und damit des gesamten Gravurfeldes 5.

Besonders bevorzugt kann vorgesehen sein, dass durchgehende Gravurstrecken 12 erzeugt werden, daher durchgehende Linien abgetragen werden und kein Punktraster erzeugt wird.

Gemäß der bevorzugten Ausführungsform kann vorgesehen sein, dass zwischen zwei benachbarten ersten Zeilen das Spiegelsystem 3 gemäß einem Zeilenvorschub bewegt wird. Dadurch können durch den Laserstrahl 4 flächige Gravuren auf dem Gravurfeld 5 erzeugt werden.

Es kann weiters vorgesehen sein, dass der Laserstrahl 4 vor dem Seitenvorschub mehrfach über eine erste Zeile bewegt wird. Dadurch können durch den Laserstrahl 4 Tiefenprofile einfach erzeugt werden.

Hierbei kann bevorzugt vorgesehen sein, dass der Zeilenvorschub derart gewählt wird, dass sich die Gravurstrecken 12 der benachbarten ersten Zeilen sich zumindest teilweise überlappen. Dadurch werden für den Intaglio-Stichtiefdruck in vorteilhafter Weise zusammenhängende abgetragene Bereiche mit glatter Struktur des Gravurbodens erreicht.

Weiters kann bevorzugt vorgesehen sein, dass dem Zeilenvorschub eine Rückstellbewegung 8 über das Gravurfeld 5 überlagert wird, und die Bewegung des Laserstrahls 2 in jeder ersten Zeile gleichgerichtet erfolgt. Dadurch kann eine hohe Qualität der Gravur erreicht werden, da die Bedingungen für jede erste Zeile gleich sind und es daher zu keinen Versetzungen der einzelnen Gravurstrecken 12 kommt.

Alternativ kann vorgesehen sein, dass in direkt benachbarten ersten Zeilen die Bewegung des Laserstrahls 4 entgegengesetzt gerichtet erfolgt. Dadurch entfällt eine Rückstellbewegung 8, wodurch die Zeitdauer für das Verfahren weiter verringert werden kann.

Weiters kann bevorzugt vorgesehen sein, dass der Anfangsbeschleunigungsbereich und der Endverzögerungsbereich außerhalb des Gravurfeldes 5 angeordnet werden. Dadurch wird das Shutterelement 7 nur zur Unterbrechung des Laserstrahls 4 benötigt, wodurch die Komplexität der Vorrichtung verringert und die Qualität der Gravur erhöht wird.

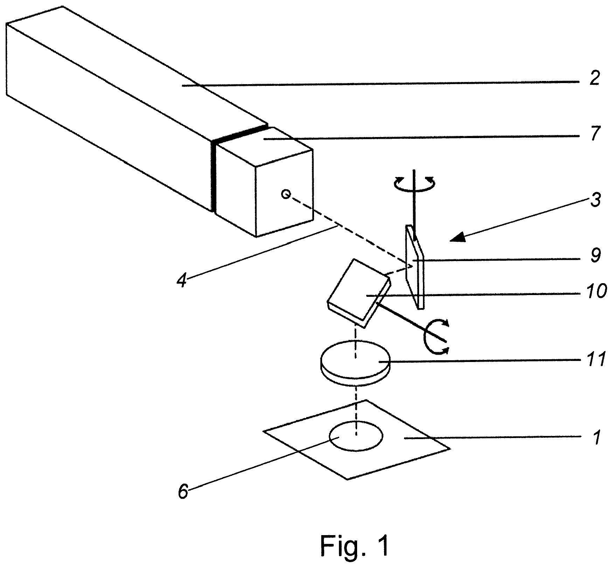

Eine bevorzugte Ausführungsform einer Vorrichtung mit welcher das Verfahren durchgeführt werden kann ist in Fig. 1 dargestellt. Diese bevorzugte Ausführungsform umfasst einen Laser 2 mit einem direkt davor angeordneten Shutterelement 7. Das Spiegelsystem 3 umfasst einen ersten Spiegel 9, welcher derart bewegbar ist, dass der Laserstrahl in eine erste Richtung vorgebbar abgelenkt werden kann, und einen zweiten Spiegel 10, welcher derart bewegbar ist, dass der Laserstrahl in eine zur ersten Richtung im Wesentlichen orthogonalen zweiten Richtung vorgebbar abgelenkt werden kann. Weiters umfasst die Vorrichtung der bevorzugten Ausführungsform eine Fokussierlinse 11.

Durch die Fokussierlinse 11 kann der Laserstrahl 4 auf die Druckplatte 1 fokussiert werden, wobei der Durchmesser des Laserstrahls 4 bevorzugt im Bereich zwischen 40 µm und 20 µm gewählt wird. Die Breite des durch den Laserstrahl 4 abgetragenen Bereiches entlang einer Gravurstrecke 12 kann im Wesentlichen dem Durchmesser des Laserstrahls 4 entsprechen. Die Breite dieses abgetragenen Bereiches wird oft auch als Spurbreite bezeichnet. Für spezielle Applikationen kann durch die Wahl des Durchmessers des Laserstrahls 4 oder durch Verringerung der Wellenlänge des Lasers 2, etwa durch Frequenzverdoppelung, oder aber auch durch die Wahl eines anderen Materials der Druckplatte die Spurbreite reduziert werden. Bevorzugt wird das Material der Druckplatte 1 vom Laserstrahl 4 bis zu einer Tiefe von 10 µm bis 200 µm abgetragen.

Als Ausgangsleistung des Lasers 2 wird bevorzugt eine Ausgangsleistung von über 10 W, insbesondere über 40 W gewählt.

Beim Verfahren wird als Laser 2 ein Pulslaser verwendet.

Solche Pulslaser senden den Laserstrahl 4 nicht kontinuierlich aus, sondern in Form von periodisch wiederkehrenden kurzen Pulsen, wobei die momentane Ausgangsleistung des Lasers 2 während des Pulses ein Vielfaches der zeitlich gemittelten Ausgangsleistung des Lasers 2 ist. Dadurch kann eine gezielte Abtragung von Material der Druckplatte 1, ohne ungebührend großen thermischen Beanspruchung der Druckplatte 1 erreicht werden.

Hierbei wird die zeitliche Dauer eines Pulses eines Pulslasers als Pulsdauer bezeichnet. Die Frequenz, mit welcher die Pulse eines Pulslasers periodisch wiederkehren, wird als Repetitionsrate bezeichnet.

Besonders bevorzugt kann vorgesehen sein, dass als Laser 2 ein Ultrakurzpulslaser verwendet wird. Als Ultrakurzpulslaser werden Pulslaser bezeichnet, deren Pulsdauer sich im Bereich von Picosekunden, Femtosekunden oder Attosekunden befindet. Ein solcher Ultrakurzpulslaser kann beispielsweise eine Pulsdauer von einigen Picosekunden haben. Durch diese kurze Pulsdauer, und der hohen Ausgangsleistung während eines Pulses des Ultrakurzpulslasers, kommt es im Wesentlichen zu einem punktuellen Abtrag von Material der Druckplatte 1, ohne dass benachbarte Bereiche aufgeschmolzen oder verdampft werden. Dadurch entfällt die Bildung von Graten um die abgetragenen Bereiche der Druckplatte 1, wodurch eine aufwendige, und sich auf die Qualität der Gravur negativ auswirkende, Nachbehandlung der Druckplatte 1, beispielsweise mittels Chemikalien oder Polieren, entfallen kann. Weiters hat sich herausgestellt, dass durch die Verwendung eines Ultrakurzpulslaser die Flanken der abgetragenen Bereiche in vorteilhafter Weise wesentlich steiler ausgebildet werden können. Darüber hinaus ergibt sich ein stabiler Laserbetrieb, da der Laser 2 kontinuierlich Pulse emittiert, deren Auftreffen auf die Druckplatte 1 aber je nach Verlage geregelt wird.

Bevorzugt kann vorgesehen sein, dass die Bewegungsgeschwindigkeit im Bereich von 0,5 m/s bis 10 m/s, vorzugsweise im Bereich von 1 m/s bis 6 m/s, insbesondere im Bereich von 2 m/s bis 5 m/s, gewählt wird. Dadurch kann die Gravur der Druckplatte 1 schnell erfolgen.

Wenn ein als Pulslaser ausgebildeter Laser 2 mit einem Shutterelement 7 gemeinsam verwendet wird, kann, da die Pulse des Laser 2 und das Shutterelement 7 nicht notwendigerweise synchronisiert sind, das Problem auftreten, dass an einem Übergang von Transferstrecke 14 zu Gravurstrecke 12, das Shutterelement 7 zwar gemäß der Vorlage geöffnet wird, die Position an welcher der Laserstrahl 4 auf die Druckplatte 1 auftreffen würde sich aber noch eine gewisse Strecke weiterbewegt, bevor der erste Puls des Lasers 2 einsetzt, welcher das Material der Druckplatte 1 abtragen kann, wodurch der exakte Punkt ab welchen das Material abgetragen wird nur innerhalb einer gewissen Schwankungsbreite vorgegeben werden kann. Beim Übergang von Gravurstrecke 12 zu Transferstrecke 14 tritt ein analoges Problem auf. Dadurch wird ein Randbereich einer gravierten Linie ausgefranst. Die Größe des ausgefransten Randbereiches hängt daher von der Repetitionsrate des Lasers 2 und der Bewegungsgeschwindigkeit des Laserstrahls 4 auf der Druckplatte 1 ab.

Besonders bevorzugt kann vorgesehen sein, dass die Repetitionsrate des Lasers 2 größer als 0,5 MHz gewählt wird. Bei einer derart hohen Repetitionsrate des Lasers 2 kann auch bei höheren Bewegungsgeschwindigkeiten des Laserstrahls 4 über die Druckplatte 1 eine Gravur der Druckplatte 1 mit guter Qualität erreicht werden. Durch die hohe Repetitionsrate und des daraus resultierenden geringen räumlichen Abstand zwischen zwei Pulsen, kann eine durchgehende Linie abgetragen werden. Weiters kann dadurch eine hohe Qualität der Gravur bezüglich der Ausbildung der Kanten erreicht werden. Bei einer Bewegungsgeschwindigkeit von beispielsweise 2 m/s und einer Repetitionsrate von 1 Mhz liegen, bei einem Durchmesser des Laserstrahls 4 von beispielsweise 25 µm, zwei Laserpulse in einem Abstand von
2 µm zueinander und überlappen damit stark.

Die Bewegungsgeschwindigkeit wird gleich dem Produkt einer Referenzgravurlinienbreite, einer Repetitionsrate des Lasers 2 und einem Randtoleranzwert gewählt. Dadurch kann eine vorgebbar gute Qualität der Gravur erreicht werden, welche insbesondere durch den Randtoleranzwert bestimmt werden kann. Dieser Randtoleranzwert ist hierbei jener Wert, welcher das Verhältnis der Breite eines ausgefransten Randbereiches zur Referenzgravurlinienbreite betragen darf. Weiters kann dadurch die Bewegungsgeschwindigkeit derart hoch gewählt werden, dass die vorgebbare Qualität gerade erreicht wird, wodurch die Dauer des Gravurprozesses gering gehalten werden kann.

Die Referenzgravurlinienbreite ist die Breite eines als Linie ausgebildeten abzutragenden Bereiches, wobei die ersten Zeilen, in welchen der Laser 2 das Material abträgt, normal zu dieser Linie angeordnet sind, und wobei sich die Referenzgravurlinienbreite im charakteristischen Bereich der Breite der Linien befindet, welche durch die Vorlage vorgegebenen sind.

Bevorzugt kann vorgesehen sein, dass die Referenzgravurlinienbreite im Bereich von 20 µm bis 200 µm, vorzugsweise im Bereich von 50 µm bis 150 µm gewählt wird. Diese Bereiche entsprechen den typischen Breite von Linien, wie sie bei der Gravur von Druckplatten 1 für den Intaglio-Stichtiefdruck von Sicherheitsdokumenten, insbesondere Banknoten oder Briefmarken verwendet werden.

Bevorzugt kann weiters vorgesehen sein, dass der Randtoleranzwert kleiner 5 %, vorzugsweise kleiner 3 %, insbesondere kleiner 1,5 % gewählt wird. Dadurch kann die Qualität der Gravur an die entsprechenden Vorgaben angepasst werden.

Gemäß einem konkreten Beispiel, welches hier nur zum Zwecke der Anschaulichkeit dient und keineswegs den Schutzbereich einschränken soll, stehen dem Benützer ein Ultrakurzpulslaser mit einer Repetitionsrate von 1 MHz zur Verfügung, mit welchen er eine Gravur erstellen soll, deren Linien eine typische Breite von 100 µm haben, weshalb der Benützer eine Referenzgravurlinienbreite von 100 µm wählt. Aufgrund der Qualitätsanforderung wird ein Randtoleranzwert von 2 % gewählt. Daher wird der Benützer in diesem Beispiel eine Bewegungsgeschwindigkeit von 2 m/s wählen, wodurch die maximale Bewegungsgeschwindigkeit welche noch den Qualitätsanforderungen entspricht erzielt wird, und daher der Dauer, in welcher die Druckplatte 1 graviert wird, so gering wie möglich gehalten wird. Sind in ausgewählten Gravurfelder 5 höhere Qualitätsansprüche notwendig, oder sollen deutlich schmalere Linien graviert werden, so kann in diesen Gravurfeldern 5 die Bewegungsgeschwindigkeit reduziert werden.

Es kann vorgesehen sein, dass mehrere Schichten in parallelen ersten Zeilen abgetragen werden, bis die gewünschte Tiefe der abgetragenen Bereiche erreicht ist.

Hierbei kann bevorzugt vorgesehen sein, dass durch den Laserstrahl 4 solange Schichten abgetragen werden, bis die gewünschte Tiefe der abgetragenen Bereiche erreicht ist.

Weiters kann bevorzugt vorgesehen sein, dass der Laserstrahl 4 zum Abtrag einer weiteren Schicht in parallelen weiteren Zeilen über das Gravurfeld 5 bewegt wird, wobei die Bewegungsgeschwindigkeit des Laserstrahls 4 in jeder weiteren Zeile nach einem Anfangsbeschleunigungsbereich bis zu einem Endverzögerungsbereich annähernd konstant gehalten wird, und dass mittels des Shutterelementes 7 das Auftreffen des Laserstrahls 4 auf dem Gravurbereich 6 geregelt wird, wobei die weiteren Zeilen gegenüber den ersten Zeilen verdreht sind. Durch die Überlagerung von relativ zueinander verdrehten Schichten ist die Orientierung der parallelen Spuren der ersten Zeilen und/oder der zweiten Zeilen weniger gut erkennbar, wodurch in vorteilhafter Weise die Qualität der Gravur weiter verbessert werden kann. Weiters kann durch die Abtragung in mehreren Schichten, wobei die weiteren Zeilen gegenüber den ersten Zeilen verdreht sind, der ausgefranste Randbereich einer gravierten Linie weniger stark ausgeprägt sein, da die Ausprägung des Randbereiches von der Richtung der parallelen Teilen einer Schicht abhängig ist.

Beispielsweise können parallelen weiteren Zeilen der zweiten Schicht einen etwa 90° Winkel zu den parallelen ersten Zeilen der ersten Schicht einschließen. Hierbei können hintereinander mehrere erste Schichten und weitere Schichten abgetragen werden, bis die gewünschte Tiefe der abgetragenen Bereiche erreicht ist.

Besonders bevorzugt kann vorgesehen sein, dass der Winkel, mit welchen die weiteren Zeilen gegenüber den ersten Zeilen verdreht wird, derart gewählt wird, dass eine vorgebbare Mehrzahl an Schichten, insbesondere mindestens zehn, abgetragen werden können, bevor die weiteren Zeilen wieder im Wesentlichen parallel zu den ersten Zeilen sind. Dadurch kann ein besonders glatter Boden der Gravur erreicht werden.

Insbesondere kann vorgesehen sein, dass für den Winkel, mit welchen die weiteren Zeilen gegenüber den ersten Zeilen verdreht wird, ein Winkel zwischen 60° und 120° gewählt wird. Dadurch kann ein besonders gutes Ergebnis erzielt werden, auch wenn lediglich wenige Schichten abgetragen werden.

In einem weiteren Beispiel schließen die parallelen ersten Zeilen der ersten Schicht und die parallelen zweiten Zeilen einer zweiten Schicht einen Winkel von 100°, und die parallelen ersten Zeilen der ersten Schicht und die parallelen dritten Zeilen einer dritten Schicht einen Winkel von 200° ein. Jede weiter Schicht wird entsprechend um weitere 100° verdreht. Hierbei sind die ersten Zeilen der ersten Schicht erst mit den Zeilen der achtzehnten Schicht im wesentlichen parallel. Auch hier können bevorzugt so viele Schichten hintereinander abgetragen werden, bis die gewünschte Tiefe der abgetragenen Bereiche erreicht ist.

Bevorzugt kann vorgesehen sein, dass ausgehend von der Vorlage, welche graviert werden soll, für die erste Schicht eine erste Vektorgrafik erzeugt wird, wobei die Vektoren der Vektorgrafik gerade und parallel sind und die Richtung der Vektoren der Ausrichtung der ersten Zeilen entspricht. Die erste Schicht kann gemäß der ersten Vektorgrafik abgetragen werden.

Besonders bevorzugt kann vorgesehen sein, dass eine erste Zeile einen Sprungvektor, für den Sprung, sowie einen einzigen durchgehenden Vektor für die wenigstens eine Gravurstrecke 12 und/oder wenigstens eine Transferstrecke 13 umfasst. Dadurch kann die Druckplatte 1 besonders schnell und effizient graviert werden. Weiters kann dadurch eine besonders gute Qualität der Gravur erreicht werden, wenn der Laserstrahl 4 mit im Wesentlichen konstanter Bewegungsgeschwindigkeit über die Druckplatte 1 bewegt wird. Weiters kann der Rechenaufwand dadurch gering gehalten werden.

Weiters kann vorgesehen sein, dass für jede weitere, insbesondere zur ersten Schicht verdrehten, Schicht eine weitere Vektorgrafik aus parallelen, geraden Vektoren erzeugt wird, wobei die Richtung der Vektoren der Ausrichtung der Zeilen der jeweiligen Schicht entspricht. Die weiteren Schichten können gemäß der weiteren Vektorgrafiken abgetragen werden.

Weiters kann bevorzugt vorgesehen sein, dass der Laserstrahl 4 entlang der Gravurstrecke 12 vom Shutterelement 7 in Abhängigkeit einer Vorlage vorgebbar abgeschwächt wird, daher nicht vollständig blockiert wird. Dadurch können kontinuierlich verlaufende Höhenprofile der Gravur erstellt werden, und/oder besonders feine Linien erstellt werden. Dadurch können besondere Designs, insbesondere für Blindprägungen, realisiert werden, wodurch die Sicherheit des Sicherheitsdokumentes weiters erhöht werden kann.

Insbesondere kann vorgesehen sein, dass die einzelnen Vektoren der Vektorgrafik mit einem zugeordneten Parameter versehen werden, wobei die Abschwächung des Laserstrahls 4 durch das Shutterelement 7 vom Parameter vorgegeben wird. Dieser Parameter kann als Grauwert oder als Linienbreite des einzelnen Vektors dargestellt werden.

## Patentansprüche

1. Verfahren zum Gravieren einer Druckplatte (1) für den Intaglio-Stichtiefdruck mit einem Laser (2) und einem mit dem Laser (2) zusammenwirkenden Spiegelsystem (3), wobei Gravurstrecken (12) vom Laserstrahl (4) durchgehend abgetragen werden, **dadurch gekennzeichnet, dass** das Spiegelsystem (3) derart bewegt wird, dass der Laserstrahl (4) des Lasers (2) bei dem Abtrag einer ersten Schicht in im Wesentlichen parallelen ersten Zeilen über ein Gravurfeld (5) bewegt wird, wobei die Bewegungsgeschwindigkeit des Laserstrahls (4) in jeder ersten Zeile nach einem Anfangsbeschleunigungsbereich bis zu einem Endverzögerungsbereich annähernd konstant gehalten wird, dass mittels eines Shutterelementes (7) das Auftreffen des Laserstrahls (4) auf einem Gravurbereich (6) in Abhängigkeit einer Vorlage geregelt wird, dass als Laser (2) ein Pulslaser verwendet wird, und dass die Bewegungsgeschwindigkeit gleich dem Produkt einer Referenzgravurlinienbreite, einer Repetitionsrate des Lasers (2) und einem Randtoleranzwert gewählt wird.

2. Verfahren nach Anspruch 1, **dadurch gekennzeichnet, dass** direkt eine Druckplatte (1) bestehend aus Metal, insbesondere Messing, vom Laserstrahl (4) graviert wird.

3. Verfahren nach einem der Anspruch 1 oder 2, **dadurch gekennzeichnet, dass** eine im Wesentlichen ebene Druckplatte (1) graviert wird.

4. Verfahren nach einem der Ansprüche 1 bis 3, **dadurch gekennzeichnet, dass** als Laser (2) ein Ultrakurzpulslaser verwendet wird.

5. Verfahren nach einem der Ansprüche 1 bis 4, **dadurch gekennzeichnet, dass** die Repetitionsrate des Lasers (2) größer als 0,5 MHz gewählt wird.

6. Verfahren nach Anspruch 5, **dadurch gekennzeichnet, dass** der Randtoleranzwert kleiner 5 %, vorzugsweise kleiner 3 %, insbesondere kleiner 1,5 % gewählt wird, und dass insbesondere die Referenzgravurlinienbreite im Bereich von 20 µm bis 200 µm, vorzugsweise im Bereich von 50 µm bis 150 µm gewählt wird.

7. Verfahren nach einem der Ansprüche 1 bis 6, **dadurch gekennzeichnet, dass** die Bewegungsgeschwindigkeit im Bereich von 0,5 m/s bis 10 m/s, vorzugsweise im Bereich von 1 m/s bis 6 m/s, insbesondere im Bereich von 2 m/s bis 5 m/s, gewählt wird.

8. Verfahren nach einem der Ansprüche 1 bis 7, **dadurch gekennzeichnet, dass** zwischen zwei benachbarten ersten Zeilen das Spiegelsystem (3) gemäß einem Zeilenvorschub bewegt wird, dass insbesondere dem Zeilenvorschub eine Rückstellbewegung (8) über das Gravurfeld (5) überlagert wird, und insbesondere die Bewegung des Laserstrahls (2) in jeder ersten Zeile gleichgerichtet erfolgt.

9. Verfahren nach einem der Ansprüche 1 bis 8, **dadurch gekennzeichnet, dass** der Anfangsbeschleunigungsbereich und der Endverzögerungsbereich außerhalb des Gravurfeldes (5) angeordnet werden.

10. Verfahren nach einem der Ansprüche 1 bis 9, **dadurch gekennzeichnet, dass** der Laserstrahl (4) zum Abtrag einer weiteren Schicht in parallelen weiteren Zeilen über das Gravurfeld (5) bewegt wird, wobei die Bewegungsgeschwindigkeit des Laserstrahls (4) in jeder weiteren Zeile nach einem Anfangsbeschleunigungsbereich bis zu einem Endverzögerungsbereich annähernd konstant gehalten wird, und dass mittels des Shutterelementes (7) das Auftreffen des Laserstrahls (4) auf dem Gravurbereich (6) geregelt wird, wobei die parallelen weiteren Zeilen gegenüber den parallelen ersten Zeilen um einen Winkel verdreht werden.

11. Verfahren nach Anspruch 10, **dadurch gekennzeichnet, dass** der Winkel, mit welchen die weiteren Zeilen gegenüber den ersten Zeilen verdreht werden, derart gewählt wird, dass eine vorgebbare Mehrzahl an Schichten, insbesondere mindestens zehn, abgetragen werden können, bevor die weiteren Zeilen wieder im Wesentlichen parallel zu den ersten Zeilen sind.

12. Verfahren nach einem der Ansprüche 1 bis 11, **dadurch gekennzeichnet, dass** die Druckplatte (1) in mehrere der Gravurbereiche (6) unterteilt wird und eine Spiegelsystemhalterung und/oder die Druckplatte (1) zwischen dem Gravieren unterschiedlicher Gravurbereiche (6) bewegt werden.

13. Verfahren nach einem der Ansprüche 1 bis 12, **dadurch gekennzeichnet, dass** der Gravurbereich (6) wiederum in mehrere Gravurfelder (5) unterteilt wird.

14. Verfahren nach einem der Ansprüche 1 bis 13, **dadurch gekennzeichnet, dass** der Laserstrahl (4) entlang einer Gravurstrecke (12) vom Shutterelement (7) in Abhängigkeit der Vorlage vorgebbar abgeschwächt wird.

15. Verfahren zur Herstellung eines Sicherheitsdokumentes, **dadurch gekennzeichnet, dass** eine zur Herstellung des Sicherheitsdokumentes verwendete Druckplatte (1) gemäß dem Verfahren nach einem der Ansprüche 1 bis 14 hergestellt wird.

## Claims

1. A method for engraving a printing plate (1) for intaglio line gravure printing, comprising a laser (2) and a mirror system (3) interacting with the laser (2), wherein gravure paths (12) are removed continuously by the laser beam (4), **characterized in that** the mirror system (3) is moved in such a way that the laser beam (4) of the laser (2), when a first layer is removed, is moved in substantially parallel first lines over a gravure field (5), wherein the movement velocity of the laser beam (4) is kept approximately constant in each first line after an initial acceleration region up to a final deceleration region, that by means of a shutter element (7) the impingement of the laser beam (4) on an engraved region (6) is controlled depending on a template, that a pulse laser is used as a laser (2), and that the movement velocity is selected equal to the product of a reference gravure line width, a repetition rate of the laser (2) and a boundary tolerance value.

2. A method according to claim 1, **characterized in that** a printing plate (1) consisting of a metal, especially brass, is directly engraved by the laser beam (4).

3. A method according to one of the claims 1 or 2, **characterized in that** a substantially flat printing plate (1) is engraved.

4. A method according to one of the claims 1 to 3, **characterized in that** an ultrashort pulse laser is used as a laser (2).

5. A method according to one of the claims 1 to 4, **characterized in that** the repetition rate of the laser (2) is selected greater than 0.5 MHz.

6. A method according to claim 5, **characterized in that** the boundary tolerance value is selected less than 5%, preferably less than 3%, especially less than 1.5%, and the reference gravure line width is especially selected in the range of 20 µm to 200 µm, preferably in the range of 50 µm to 150 µm.

7. A method according to one of the claims 1 to 6, **characterized in that** the movement velocity is selected in the range of 0.5 m/s to 10 m/s, preferably in the range of 1 m/s to 6 m/s, especially in the range of 2 m/s to 5 m/s.

8. A method according to one of the claims 1 to 7, **characterized in that** the mirror system (3) is moved according to a line feed between two adjacent first lines, that a return movement (8) is superimposed especially on the line feed over the gravure field (5), and that especially the movement of the laser beam (2) in each first line occurs in a co-directional manner.

9. A method according to one of the claims 1 to 8, **characterized in that** the initial acceleration region and the final deceleration region are arranged outside of the gravure field (5).

10. A method according to one of the claims 1 to 9, **characterized in that** the laser beam (4) is moved in parallel further lines over the gravure field (5) for removing a further layer, wherein the movement velocity of the laser beam (4) in each further line is kept approximately constant after an initial acceleration region up to a final deceleration region, and that by means of the shutter element (7) the impingement of the laser beam (4) on the engraved region (6) is controlled, wherein the parallel further lines are twisted about an angle in relation to the parallel first lines.

11. A method according to claim 10, **characterized in that** the angle with which the further lines are twisted in relation to the first lines are selected in such a way that a predeterminable plurality of layers, especially at least ten, can be removed before the further lines are again substantially parallel to the first lines.

12. A method according to one of the claims 1 to 11, **characterized in that** the printing plate (1) is subdivided into several of the engraved regions (6), and a mirror system support and/or the printing plate (1) are moved between the engraving of different engraved regions (6).

13. A method according to one of the claims 1 to 12, **characterized in that** the engraved region (6) is again subdivided into several gravure fields (5).

14. A method according to one of the claims 1 to 13, **characterized in that** the laser beam (4) is weakened in a predeterminable manner along a gravure path (12) by the shutter element (7) depending on the template.

15. A method for producing a security document, **characterized in that** a printing plate (1), which is used for producing the security document, is produced according to the method according to one of the claims 1 to 14.

## Revendications

1. Procédé pour graver une plaque d'impression (1) pour la surimpression en taille-douce avec un laser (2) et avec un système de miroirs (3) coopérant avec le laser (2), dans lequel des trajets de gravure (12) sont enlevés en continu par le faisceau laser (4), **caractérisé en ce que** le système de miroirs (3) est déplacé de telle manière que le faisceau laser (4) du laser (2) est déplacé lors de l'enlèvement d'une première couche en premières lignes sensiblement parallèles au-dessus d'un champ de gravure (5), la vitesse de déplacement du faisceau laser (4) étant maintenue approximativement constante dans chaque première ligne après une zone d'accélération initiale jusqu'à une zone de décélération finale, **en ce qu'**un élément d'obturateur (7) régule l'incidence du faisceau laser (4) dans une zone de gravure (6) en fonction d'un modèle, **en ce que** le laser (2) utilisé est un laser pulsé et **en ce que** la vitesse de déplacement est choisie égale au produit d'une largeur de ligne de gravure de référence, d'un taux de répétition du laser (2) et d'une valeur de tolérance de bords.

2. Procédé selon la revendication 1, **caractérisé en ce qu'**une plaque d'impression (1) composée de métal, en particulier de laiton, est gravée directement par le faisceau laser (4).

3. Procédé selon l'une des revendications 1 ou 2, **caractérisé en ce qu'**une plaque d'impression (1) plane pour l'essentiel est gravée.

4. Procédé selon l'une des revendications 1 à 3, **caractérisé en ce que** le laser (2) utilisé est un laser à impulsions ultracourtes.

5. Procédé selon l'une des revendications 1 à 4, **caractérisé en ce que** le taux de répétition du laser (2) est choisi supérieur à 0,5 MHz.

6. Procédé selon la revendication 5, **caractérisé en ce que** la valeur de tolérance de bords est choisie inférieure à 5 %, de préférence inférieure à 3 %, en particulier inférieure à 1,5 % et **en ce que** la largeur de ligne de gravure de référence, en particulier, est choisie entre 20 µm et 200 µm, de préférence entre 50 µm et 150 µm.

7. Procédé selon l'une des revendications 1 à 6, **caractérisé en ce que** la vitesse de déplacement est choisie entre 0,5 m/s et 10 m/s, de préférence entre 1 m/s et 6 m/s, en particulier entre 2 m/s et 5 m/s.

8. Procédé selon l'une des revendications 1 à 7, **caractérisé en ce qu'**entre deux premières lignes voisines, le système de miroirs (3) est déplacé selon un avancement de ligne, **en ce qu'**un mouvement de retour (8) sur le champ de gravure (5) est en particulier superposé à l'avancement de ligne et en particulier le mouvement du faisceau laser (2) s'effectue dans la même direction sur chaque première ligne.

9. Procédé selon l'une des revendications 1 à 8, **caractérisé en ce que** la zone d'accélération initiale et la zone de décélération finale sont disposées en dehors du champ de gravure (5).

10. Procédé selon l'une des revendications 1 à 9, **caractérisé en ce que** le faisceau laser (4) est déplacé pour enlever une nouvelle couche en nouvelles lignes parallèles par-dessus le champ de gravure (5), la vitesse de déplacement du faisceau laser (4) dans chaque nouvelle ligne étant maintenue à peu près constante après une zone d'accélération initiale et jusqu'à une zone de décélération finale, et **en ce que** l'élément d'obturateur (7) régule l'incidence du faisceau laser (4) sur la zone de gravure (6), les autres lignes parallèles étant tournées selon un angle par rapport aux premières lignes parallèles.

11. Procédé selon la revendication 10, **caractérisé en ce que** l'angle duquel les autres lignes sont tournées par rapport aux premières lignes est choisi de façon à pouvoir enlever un nombre pouvant être prédéterminé de couches, en particulier au moins dix couches, avant que les autres lignes se retrouvent sensiblement parallèles aux premières lignes.

12. Procédé selon l'une des revendications 1 à 11, **caractérisé en ce que** la plaque d'impression (1) est partagée en plusieurs zones de gravure (6) et une monture du système de miroirs et/ou la plaque d'impression (1) sont déplacées entre la gravure de zones de gravure (6) différentes.

13. Procédé selon l'une des revendications 1 à 12, **caractérisé en ce que** la zone de gravure (6) est à son tour partagée en plusieurs champs de gravure (5).

14. Procédé selon l'une des revendications 1 à 13, **caractérisé en ce que** le faisceau laser (4) est atténué d'une façon pouvant être prédéterminée le long d'un trajet de gravure (12) par l'élément d'obturateur (7) en fonction de la consigne.

15. Procédé pour fabriquer un document de sécurité, **caractérisé en ce qu'**une plaque d'impression (1) utilisée pour fabriquer le document de sécurité est fabriquée suivant le procédé selon l'une des revendications 1 à 14.
